# EUROPÄISCHE PATENTSCHRIFT

(11) **EP 1 250 073 B1**
(45) Veröffentlichungstag und Bekanntmachung des Hinweises auf die Patenterteilung: **29.09.2004**
(21) Anmeldenummer: 00901011.7
(22) Anmeldetag: 27.01.2000
(51) Int. Cl.: A47F 1/00

(54) **STECKVERBINDUNG FÜR DISPLAYSYSTEM**
PLUG-IN CONNECTION FOR A DISPLAY SYSTEM
ASSEMBLAGE ENFICHABLE POUR SYSTEME DE PRESENTATION

(43) Veröffentlichungstag der Anmeldung: 23.10.2002
(73) Patentinhaber: Gery GmbH, 8610 Uster (CH)
(72) Erfinder: BUERGIN, Gerhard, CH-8610 Uster (CH)
(74) Vertreter: Irniger, Ernst
(86) Internationale Anmeldenummer: PCT/CH2000/000038
(87) Internationale Veröffentlichungsnummer: WO 2000/021418

(56) Entgegenhaltungen:
- US-A- 4 932 105
- US-A- 5 114 203
- US-A- 5 716 154
- US-A- 5 875 895
- US-A- 6 004 065

## Beschreibung

Die vorliegende Erfindung betrifft eine Anordnung zum Verbinden gemäss dem Oberbegriff nach Anspruch 1, eine Konstruktionsanordnung für das Herstellen von Displays, Tischen, Präsentationsregalen und dgl. sowie eine Display-Anordnung für die Präsentation von Werbebotschaften, Plakaten, Instruktionstafeln und dgl.

Leichte, handliche und schnell montierbare Display-Systeme sind heute mehr denn je gefragt im Bereich Präsentation, Ausstellungen, Schulung, Werbung, usw. Aufgrund ihrer einfachen Konstruktion, des leichten Gewichtes und der schnellen Handhabung sind sie einfach und leicht zu transportieren und jeweils am Einsatz-Ort schnell aufgebaut. Der Grund der grossen Beliebtheit derartiger Display-Systeme liegt in der Erkenntnis, dass Bilder und Präsencacionscharts der direkteste Weg sind, um Informationen und Eindrücke zu vermitteln. Im visuellen Zeitalter ist es wichtig, sich mit Bildern und visuallisierten Vorgängen und Botschaften von der Masse der Bilderflut abzuheben. Dabei spielen Bildgrösse und die Art der Präsentation eine wesentliche Rolle bei der Uebermittlung der Bilder bzw. der Botschaft. Auch grosse Bilder sowie einprägsame und gut gestaltete Displays bzw. Präsentationscharts müssen schnell und einfach handhabbar präsentierbar sein, weshalb es wichtig ist, dass das entsprechende Display-System die vorgenannten vorteilhaften Eigenschaften aufweist.

Die Vielzahl der angebotenen Systeme ist wohl einfach in der Handhabung und verfügt über eine leichte Konstruktion, jedoch ist in der Regel die Stabilität dieser Systeme ungenügend. Auch sind die bekannten Display-Systeme oft einseitig auf das Anordnen von Bildern oder Posters ausgerichtet, und nicht vielseitig verwendbar, z.B. zum Aufbauen von Regalen, Präsentationstischen und dgl.

Es ist daher eine Aufgabe der vorliegenden Erfindung ein Display-System vorzuschlagen, welches leicht montierbar und über eine einfache Konstruktion verfügt, sowie vielseitig verwendbar ist und trotzdem eine gute Stabilität aufweist.

Die Aufgabe wird gelöst mittels einer Anordnung zum Verbinden von zwei oder mehreren Teilen gemäss dem Wortlaut nach Anspruch 1, insbesondere geeignet für ein Display-System der obengenannten Art, um diesem die gemäss der Aufgabe geforderten Eigenschaften zu verleihen.

Als Basis für das erfindungsgemäss geforderte Display-System bzw. die modulare und multifunktionale Konstruktions-Anordnung dient die Verbindungsanordnung, wie in den Ansprüchen 1 ff dargelegt. Die erfindungsgemässe Verbindungsanordnung dient zum Verbindung eines im wesentlichen stabförmigen bzw. längsausgedehnten Elementes mit einem plattenartigen bzw. flächigen Element, und ist gekennzeichnet durch
- einen Verbindungsstift, aufweisend an einem Ende ein Gewinde oder eine einsteckbare Befestigungskontur sowie am anderen Ende eine Abschlussfläche, welche einen weitgehendst auf den Querschnitt des Stiftes bezogen, vollflächigen Querschnitt aufweist, und von dieser Abschlussfläche in Richtung Stiftmitte zurückversetzt seitliche Einkerbungen oder Ausnehmungen zur Bildung einer quer zur Stiftlängsachse verlaufenden Führungslasche,
- eine Aufnahme in einer Endabschlussfläche des stabförmigen Elementes für das Gewinde oder die Befestigungskontur derart, dass der Verbindungsstift durch eine Drehbewegung in die Aufnahme bewegbar ist, und
- mindestens eine schlitzartige Nut im plattenartigen Element, in welche die Führungslasche längsbeweglich aufnehmbar ist, sowie eine Durchgangsöffnung im Bereich der schlitzartigen Nut, um das andere Ende und deren Abschlussfläche durch die Platte hindurch aufzunehmen und um die Führungslasche in die schlitzartige Nut einführen zu können.

Bevorzugte Ausführungsvarianten der erfindungsgemässen Anordnung sind in den Ansprüchen 2 ff charakterisiert.

Die erfindungsgemässe Verbindungsanordnung ist insbesondere geeignet um eine einfache und leichte Konstruktionsanordnung der erfindungsgemäss geforderten Art zu ermöglichen. Eine erfindungsgemäss vorgeschlagene Konstruktionsanordnung, insbesondere gemäss dem Wortlaut nach Anspruch 4, weist eine oder mehrere erfindungsgemässe Verbindungsanordnungen auf, wobei ein oder mehrere stabförmige Elemente vorgesehen sind, welche ein- oder mehrteilig ausgebildet sein können, und von welchen optional gegebenenfalls beide Enden eine Aufnahme aufweisen können für die Aufnahme je eines Verbindungsstiftes und wobei das plattenartige Element mehrere schlitzartige Oeffnungen bzw. Nuten aufweisen kann.

Insbesondere zur Bildung einer erfindungsgemässen Display-Anordnung wird weiter ein flächiges Montageblech bzw. ein Montagebügel vorgeschlagen, aufweisend eine mittige Durchgangsöffnung mit einem Durchmesser in etwa entsprechend oder etwas grösser als der Durchmesser des Verbindungsstiftes sowie mindestens einen, vorzugsweise zwei seitlich vorstehende Montageoder Halteabschnitte, wobei das Montageblech vorgesehen ist um in der Verbindungsanordnung zwischen stabförmigem Element und plattenartigem Element angeordnet zu werden.

Das Montageblech weist vorzugsweise zwei zueinander gegenüberliegende Halteabschnitte auf, welche beispielsweise durch weitgehendst halbkreisförmige Ausbuchtungen gebildet sind, welche in Richtung vom stabförmigen Element weg hin offen ausgebildet sind, vorzugsweise vorgesehen für die Aufnahme von Display- bzw. Posterabschlussstäben. Selbstverständlich können diese Halteabschnitte auch andersartig, wie beispielsweise hakenförmig, ausgebildet sein.

Allerdings ist es möglich, dass die längsausgedehnten, stabförmigen Elemente auf der einen Seite eine Aufnahme gemäss Verbindungsanordnung der vorliegenden Erfindung aufweisen und am anderen Ende einen Montage- bzw. Befestigungsabschnitt, wie beispielsweise ein Gewinde oder eine Steckkontur, um wiederum ein weiteres erfindungsgemässes Montageblech zu halten, ohne die Notwendigkeit, dass zusätzlich ein plattenartiges Element anzuordnen ist.

Bevorzugte Ausführungsvarianten der erfindungsgemässen Konstruktionsanordnung bzw. der Display-Anordnung sind in den Ansprüchen 4 ff charakterisiert. Die Erfindung wird nun beispielsweise und unter Bezug auf die beigefügten Figuren näher erlauben.

Dabei zeigen:
- Fig. 1: schematisch in Perspektive eine erfindungsgemässe Verbindungsanordnung im nichtmontierten Zustand,
- Fig. 1a: einen Verbindungsstift der Verbindungsanordnung aus Fig. 1,
- Fig. 2: in Perspektive ein Montageblech, insbesondere geeignet für die Verwendung in einer erfindungsgemässen Display-Anordnung,
- Fig. 3a-c: schematisch, in Perspektive, anhand dreier Montageschritte das Erstellen einer erfindungsgemässen Verbindungsanordnung,
- Fig. 4: im Querschnitt eine zusammengefügte bzw. erstellte Verbindungsanordnung in einer Display-Anordnung inkl. angeordnetem Montageblech,
- Fig. 5: die Verbindungsanordnung sowie Montageblech aus Fig. 3, in Obendraufsicht,
- Fig. 6a-d: schematisch, anhand von vier Montageschritten eine Ausführungsvariante einer erfindungsgemässen Display-Anordnung,
- Fig. 7a+7b: eine erfindungsgemässe Verbindungsanordnung, beispielsweise zur Erstellung eines Tischfusses bzw. eines Tischbeines für eine Konstruktions- bzw. Display-Anordnung der erfinderischen Art im Querschnitt sowie in Obendraufsicht,
- Fig. 8+8a: in perspektivischer Ansicht einen Präsentationstisch in Kombination mit einer erfindungsgemässen Display-Anordnung, inkl. einem zusätzlich montiertem Beleuchtungskörper sowie einen Ausschnitt der Tischhalterung,
- Fig. 9a+9b: eine weitere Ausführungsvariante eines Montagebügels geeignet, beispielsweise für die Montage eines Beleuchtungskörpers, wie dargestellt in Fig. 9b,
- Fig. 10: einen Querstabilisator im oberen Bereich einer längsausgedehnten Displayanordnung, und
- Fig. 11: eine weitere Verwendung einer erfindungsgemässen Konstruktionsanordnung.

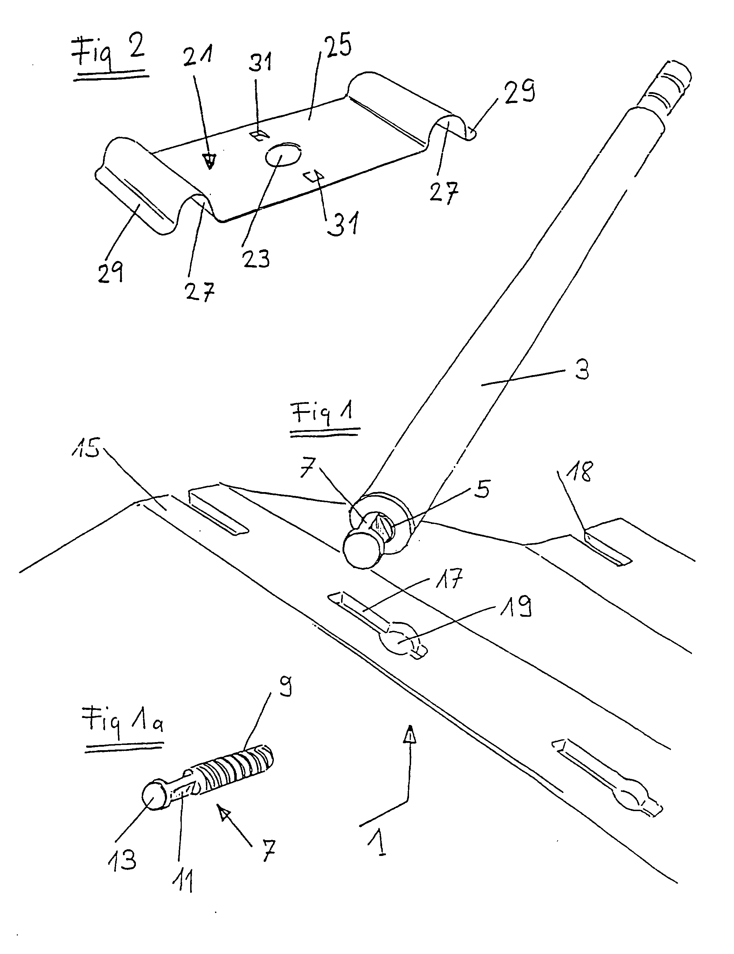

In Fig. 1 ist im auseinandergezogenen Zustand eine erfindungsgemässe Verbindungsanordnung 1 dargestellt, umfassend einen Stab 3, welcher am einen Ende eine Aufnahme 5 aufweist, mit entsprechenden Gewindebohrungen. In dieser Aufnahme 5 eingeschraubt ist ein Verbindungsstift 7, welcher in Fig. 1a im herausgeschraubten, nichtmontierten Zustand dargestellt ist. Dieser Verbindungsstift 7 weist einerseits ein Gewinde 9 auf, vorgesehen für das Einschrauben in die Aufnahme 5, sowie am anderen Ende eine Abschlussfläche 13, und zurückversetzt von dieser Abschlussfläche 13 eine Führungslasche 11. Schlussendlich ist in einem flächigen Element bzw. einer Bodenplatte 15 mindestens eine schlitzartige Oeffnung bzw. Nut 17 vorgesehen, in deren Bereich weiter eine Durchgangsöffnung 19 vorgesehen ist, damit die Abschlussfläche 13 des Verbindungsstiftes 7 durch die Platte 15 hindurch eingesteckt werden kann. Entsprechend ist der Durchmesser der Oeffnung 19 mindestens gleich dem oder grösser als der Durchmesser der Abschlussfläche 13 auszubilden.

Für die Montage der Verbindungsanordnung wird nun zunächst der Verbindungsstift 7 teilweise in die Aufnahme 5 des Stabes 3 eingeschraubt und anschliessend der Stift durch die Oeffnung 19 hindurch in die Platte 15 eingesteckt. Anschliessend wird der Stift mittels der Führungslasche 11 in die schlitzartige Oeffnung 17 eingeführt und durch Drehen des Stabes 3 erfolgt die definitive Montage bzw. das Verbinden des Stabes 3 mit der Platte 15, indem durch die Drehbewegung das Gewinde 9 bzw. der Stift 7 in den Stab 3 hineinbewegt wird.

Selbstverständlich ist es möglich anstelle des Gewindes 9 auch einen anderen Einsteckverschluss zu wählen, wie beispielsweise ein Bajonettverschluss, wobei es aber wichtig ist, dass bei der für die Montage notwendige Drehbewegung der Stift 7 in die Aufnahme 5 hineingetrieben wird, um so die Endfläche des Stabes 3 gegen die Platte 15 zu treiben und den Stab mit der Platte fest zu verbinden.

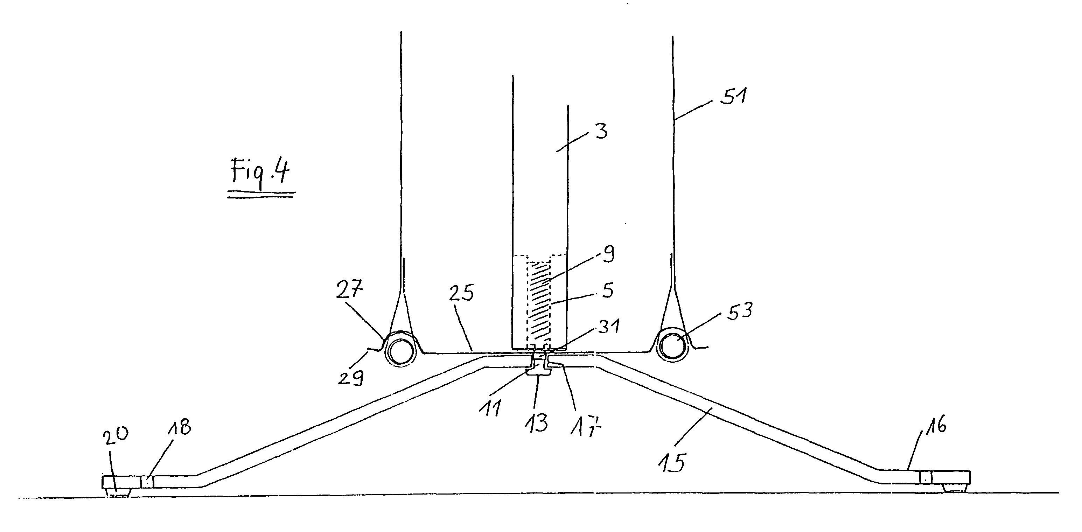

Insbesondere geeignet für die Bildung einer erfindungsgemässen Display-Anordnung wird eine Montageplatte 21, dargestellt in Fig. 2, verwendet. Dieses Montageblech weist einen mittigen, flächigen Bereich 25 auf, mit einem mittigen Loch 23, welches mindestens einen Durchmesser aufweist gleich oder grösser als der Durchmesser des Verbindungsstiftes. Je beidseitig des mittigen, flächigen Abschnittes 25 sind Halte- oder Montageabschnitte 27 vorgesehen, welche beispielsweise durch halbkreisförmige kanalartige Ausbuchtungen 27 gebildet werden. Je seitlich abgeschlossen wird das Montageblech durch Auskragungen 29. In Fig. 2 ebenfalls erkennbar sind zwei vom flächigen Bereich 25 vorstehende Nocken 31, auf deren Funktion, unter Bezug auf Fig. 4, näher eingegangen wird.

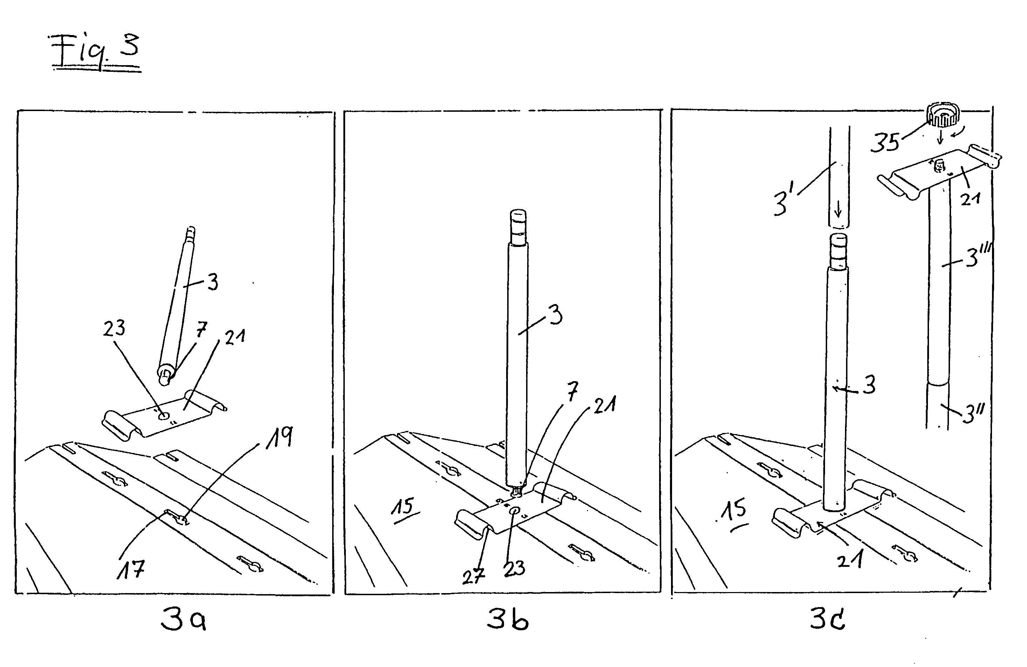

In den Fig. 3a bis 3b ist schematisch anhand dreier Montageschritte dargestellt, wie die in den Fig. 1 und 2 gezeigten Elemente zusammengefügt werden zum Erstellen der erfindungsgemässen Verbindungsanordnung. In Fig. 3a sind nun die Elemente aus den Figuren 1 und 2 im montagefertigen Zustand dargestellt, wobei nun zunächst, wie in Fig. 3b dargestellt, der Montagebügel 21 auf die Durchgangsöffnung 19 gelegt wird. Dabei ist es wichtig, dass die halbkreisförmige Öffnung 27 des Bügels 21 nach unten offen ausgebildet ist, wobei auf dieses Erfordernis noch nachfolgend unter Bezug auf die Figuren 4 und folgende eingegangen wird. Wichtig ist, dass das mittige Durchgangsloch 23 auf die Durchgangsöffnung 19 gelegt wird, damit nun der Verbindungsstift 7 mit der frontseitigen Kontur 13 durch die beiden Lochungen hindurch in die Bodenplatte 15 eingesteckt werden kann. Nun wird der Stab 3 solange gedreht, bis die Führungslasche 11 des Stiftes 7 in die Nut 17 eingeführt werden kann, wobei gleichzeitig der Bügel bzw. das Montageblech 21 so positioniert wird, dass die beiden Nocken 31 in die schlitzartige Öffnung resp. Nut 17 einrasten. Anschliessend wird der Stab 3, wie in Fig. 3c dargestellt, solange gedreht, bis der Stab fest mit der Bodenplatte 15 verbunden ist. Anschliessend können nun weitere stabförmige Elemente 3' und 3" auf den Stab 3 aufgesteckt werden, worauf am oberen Ende des Stabes ein weiteres Montageblech angebracht und mittels einer Schraubverbindung resp. einer Mutter 35 am Stab befestigt werden kann.

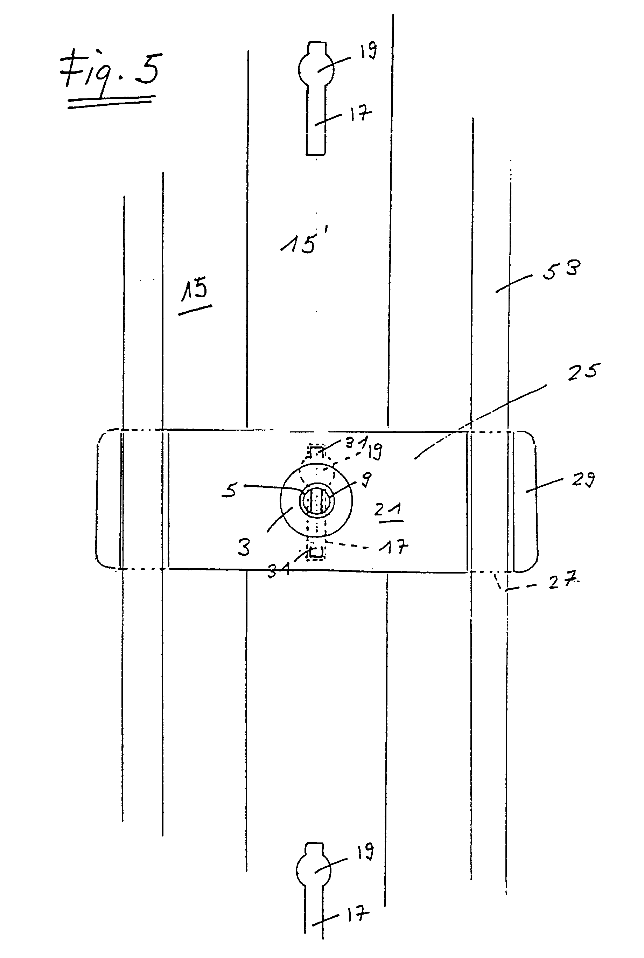

Fig. 4 zeigt im Querschnitt den Fussbereich einer erfindungsgemässen Display-Anordnung. Dabei ist in einer Bodenplatte 15 mit dieser fest verbunden, ein Träger- oder Stativstab 3 angeordnet. Der Verbindungsstift 7 ist mit seinem Gewinde fest in der Aufnahme 5 eingedreht, und andererseits mit der Führungslasche 11 verdrehsicher in der schlitzartigen Oeffnung 17 eingeführt, wobei die Abschlussfläche 13 den Stift fest in der schlitzartigen Oeffnung hält. Zwischen Bodenplatte 15 und Stab 3 ist ein Montageblech angeordnet, wobei der flächige Teil 25 auf einer mittig vom Untergrund abgehobenen Partie der Bodenplatte 15 aufliegt. Wie insbesondere in Fig. 5 erkennbar ist, ist das Montageblech derart in bezug auf die Bodenplatte 15 bzw. die schlitzartige Oeffnung 17 positioniert, dass die beiden vorstehenden Nocken 31 in die schlitzartige Oeffnung 17 eingreifen. Dadurch entfällt die Notwendigkeit des komplizierten Positionierens des Montagebleches während der Montage, da diese Nocken beim Erstellen der Verbindung zwischen Stab und Bodenplatte automatisch im Führungsschlitz 17 gehalten werden. Die in Fig. 5 dargestellte Positionierung bezüglich der Bodenplatte 15 ist wichtig, damit die anzuordnenden Präsentationsposter bzw. Displays 51 richtig in bezug auf die Bodenplatte 15 positioniert werden. Das Anordnen der Poster bzw. Displays 51 erfolgt, indem endständig an den Posters oder Displays angeordnete Haltestäbe in den halbkreisförmigen Halteabschnitt 27 des Montagebleches eingeführt werden, was dadurch ermöglicht wird, indem vorzugsweise die Montagebleche leicht federnd flexibel ausgebildet sind.

Aus den Figuren 4 und 5 ist weiter deutlich erkennbar, dass die Bodenplatte 15 eine seitliche Randpartie 16 aufweist, um der Bodenplatte 15 eine hohe Standfestigkeit zu verleihen. Vor allem im Vergleich mit den bis heute bekannten Displayanordnungen ist dies ein weiterer wesentlicher Vorteil der vorliegenden Erfindung, dass die Bodenplatte in Längsrichtung verlaufend eine mittige, erhöhte, längsausgedehnte, stegartige Positionierungsfläche 15' aufweist und zusätzlich die beiden erwähnten seitlichen Auflageflächen 16, um so der Displayanordnung eine erhöhte Standfestigkeit zu verleihen.

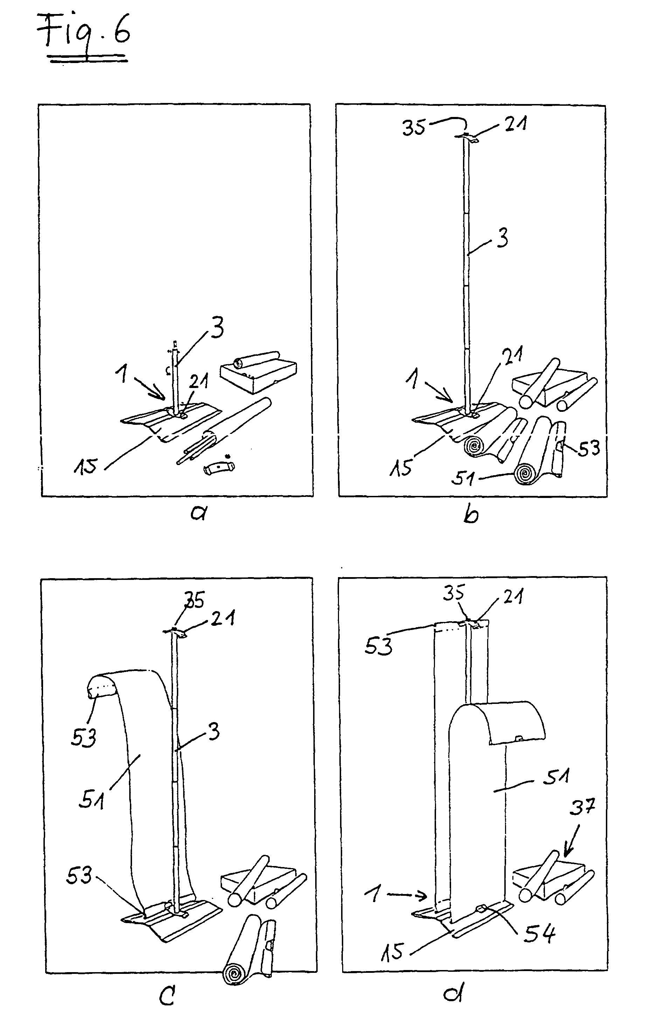

Fig. 6 zeigt anhand einer Ausführungsvariante einer Display-Anordnung vier Montageschritte, mittels welchen das Display-System aufgestellt werden kann. Gemäss Fig. 6a wird zunächst eine Bodenplatte 15 an der Stelle positioniert, wo Displays oder Posters anzuordnen sind. Wie in den Fig. 4 und 5 dargestellt, wird nun zunächst ein erstes Teilstück des Tragstabes 3 über eine Verbindungsanordnung 1 mit der Bodenplatte 15 verbunden, wobei zusätzlich das uns bereits bekannte Montageblech 21 zwischen Stab und Bodenplatte 15 angeordnet wird.

Gemäss Fig. 6b werden weitere Stabelemente hinzugefügt, was beispielsweise mittels einfachen Steckverbindung erfolgen kann. Am Ende weist der nun so in seiner ganzen Länge aufgebaute Träger oder Stativstab 3 einen weiteren Montage- oder Halterungsabschnitt auf, wodurch es möglich wird, ein weiteres Montageblech resp. einen Montagebügel 21 anzuordnen, welches beispielsweise mit einer Gewindemutter oder einem anderen Element 35 fest auf dem Stab 3 gehalten wird.

In einem weiteren Montageschritt, gemäss Fig. 6c wird ein Poster bzw. ein Display 51 zwischen dem unteren Montageblech und dem oberen Montageblech 21 aufgespannt, wobei jeweils endständig am Poster bzw. Display angeordnete Haltestäbe 53 in die halbkreisförmigen kanalförmigen Halteabschnitte der beiden Montagebleche eingeführt werden. Um dieses Einführen zu ermöglichen, weist der Poster jeweils mittig im Bereich der beiden Haltestäbe eine Durchgangsöffnung 54 auf, durch welche hindurch die Aufkragung 29 bzw. der Halteabschnitt 27 hindurchgeführt werden kann. Um die Montage zu ermöglichen ist es notwendig, dass die beiden halbkreisförmigen Kanäle jeweils vom Tragstab 3 weggerichtet, offen ausgebildet sind.

In Fig. 6d schlussendlich ist der eine Poster bzw. das Display bereits montiert, währenddem nun ein zweiter Poster bzw. ein zweites Display 51 angeordnet wird, wiederum durch Einführen der beiden endständigen Stäbe 53 in die im Montageblech angeordneten Halteabschnitte 27.

Der grosse Vorteil des erfindungsgemäss dargestellten Display-Systems liegt in der hohen Stabilität, indem durch Anordnen von zwei Posters bzw. Displays eine gegenseitige Stabilisierung der Konstruktion erfolgt. Zudem sind die beiden Posters bzw. Displays fest angespannt, indem beim Montieren die Bleche jeweils rückwärts gebogen werden können, und somit die Anspannung durch die federnde Rückstellkraft der Montagebleche erzeugt wird. Ein weiterer Vorteil liegt bei diesem Display-System darin, dass es im nichtmontierten Zustand nur sehr wenig Raum einnimmt und somit nur eine sehr kleine Verpackungseinheit 37 bildet, wie beispielsweise in Fig. 6d dargestellt.

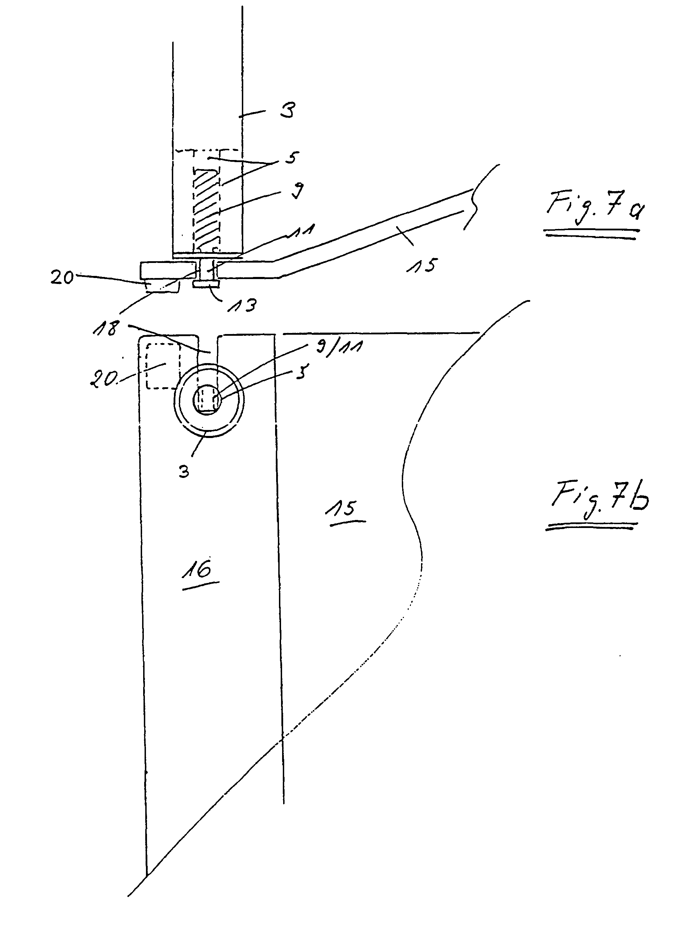

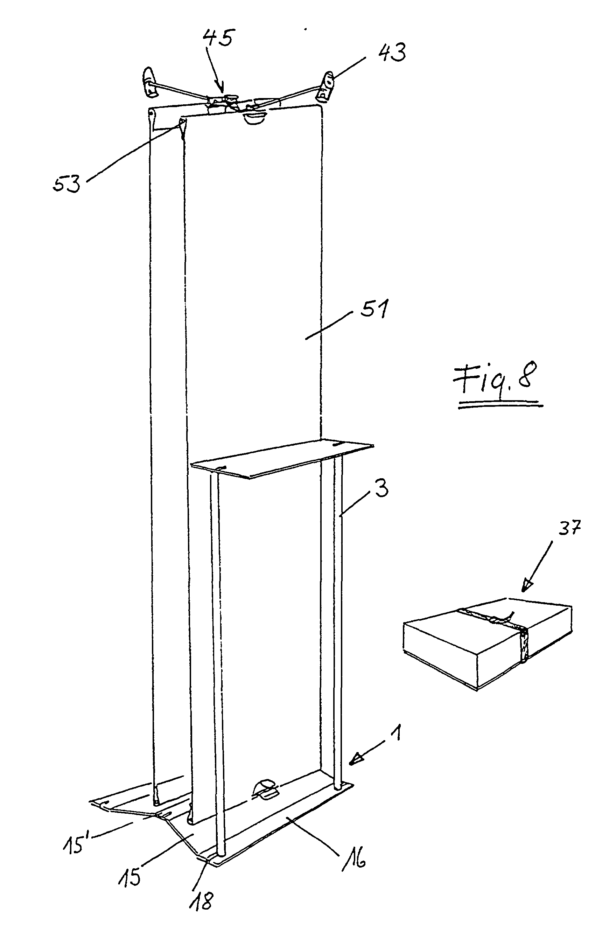

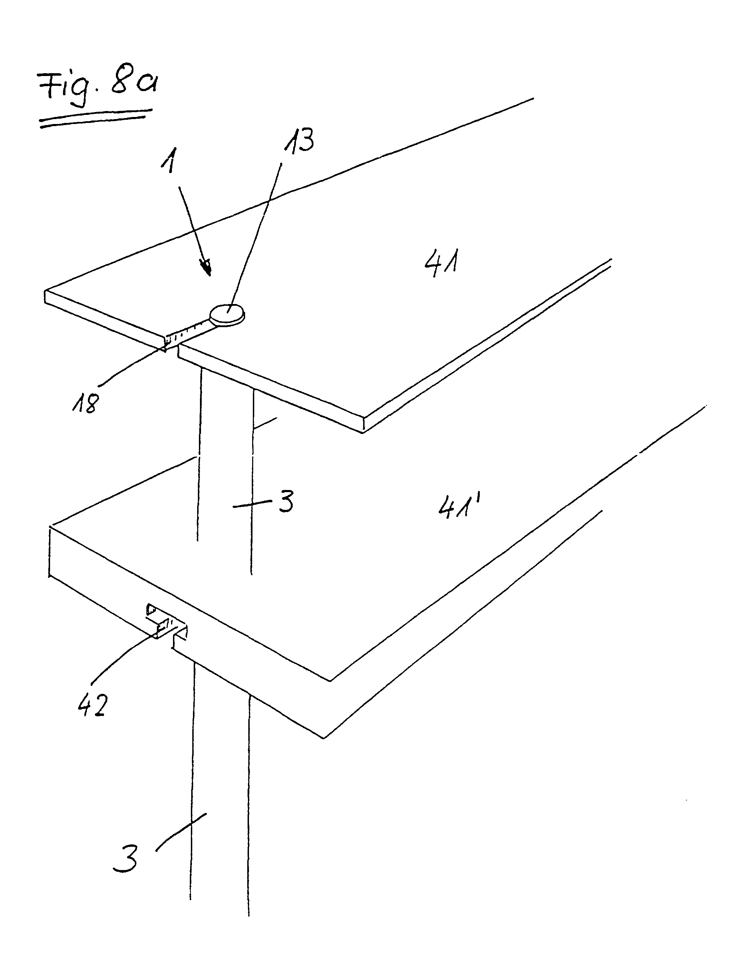

In den Fig. 7a und 7b ist eine weitere Verbindungsanordnung dargestellt, indem beispielsweise in einem seitlichen Abschnitt der Bodenplatte 15 bzw. in einem Randbereich ein Tischbein bzw. ein Tischfuss montiert werden kann, zur Bildung eines Präsentationstisches, wie in Fig. 8 dargestellt. In Abweichung zur mittigen erhöhten Partie, in welcher der Tragstab für die Displays angeordnet ist, weist die schlitzartige Oeffnung 18 in den Fig. 6a und 6b keine Durchgangsöffnung 19 auf, da die Führungslasche 11 seitlich von aussen in den Schlitz 18 eingeführt werden kann. Damit die Abschlussfläche 13 nicht auf dem Boden aufliegt, ist die Randpartie 16 der Bodenplatte 15 vorzugsweise mit einem kleinen Sockel bzw. Gummisockel 20 versehen, um so einen Abstand vom Untergrund zu bilden. Im übrigen ist die erfindungsgemässe Verbindungsanordnung analog derjenigen, beispielsweise dargestellt in Fig. 4, mit der Ausnahme, dass auf das Montageblech verzichtet wird.

Um den Präsentationstisch 41, dargestellt in Fig. 8, zu halten, sind die beiden Tragstäbe 3 an ihrem oberen Ende wiederum mit entsprechenden Halte- bzw. Montageabschnitten versehen, an oder in welche das Tablar bzw. der Tisch 41 eingesteckt oder aufgeschraubt werden kann.

Wie weiter in Fig. 8 erkennbar ist, kann am oberen Ende des Display-Systems weiter ein Beleuchtungskörper 43 vorgesehen werden, welcher mittels eines zusätzlichen, weiteren Montageblechs 45 angeordnet werden kann. Fig. 8a zeigt schematisch, in Perspektive zwei Möglichkeiten, wie der Präsentationstisch 41 am Stab 3 befestigt werden kann. Entweder erfolgt dies wie im oberen Teil von Fig. 8a dargestellt durch die erneute Verwendung einer erfindungsgemässen Verbindungsanordnung 1, wobei der Verbindungsstift in einen seitlichen Schlitz 18' des Präsentationstisches 41 eingeführt wird, oder aber, wie im unteren Teil von Fig. 8a dargestellt, kann die endständige Kontur 13 des Verbindungsstiftes in eine eingefräste Nut 42 eingeführt werden, um anschliessend durch Drehen des Stabes 3 fest mit der Tischplatte 41' verbunden zu werden.

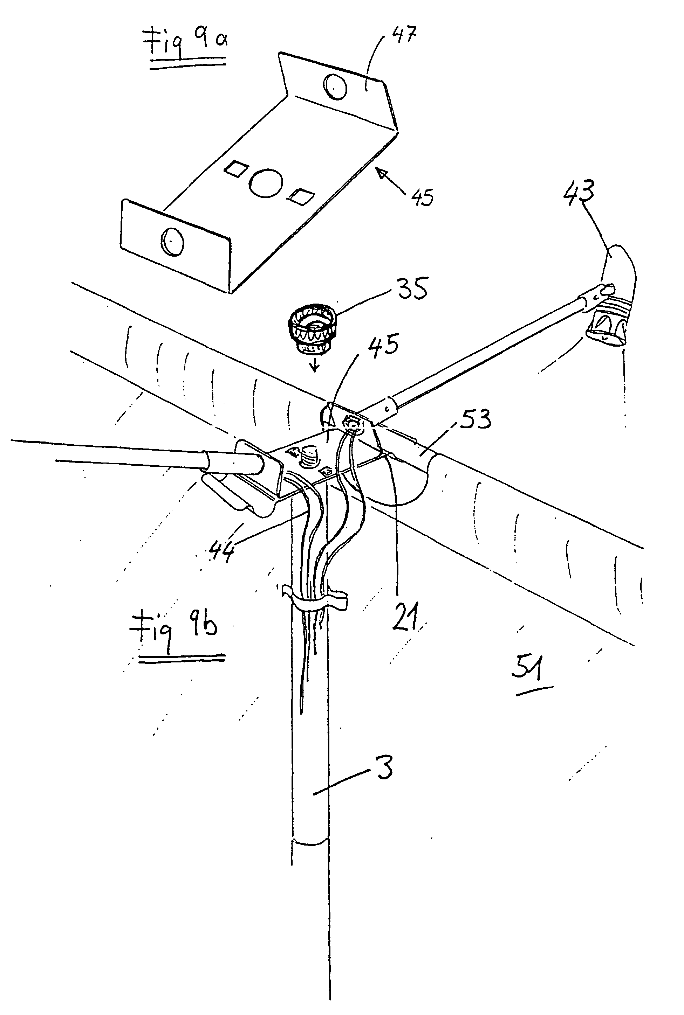

Ein weiteres Montageblech 45 gemäss Fig. 8 ist in Perspektive in Fig. 9a dargestellt, wobei dieses Montageblech U-förmig ausgebildet ist, aufweisend zwei seitlich aufgebogene, flächige Abschnitte 47, an welchen beispielsweise die in Fig. 7 dargestellte Lampe 43 angeordnet werden kann.

Fig. 9b zeigt den oberen Bereich der Displayanordnung gemäss Fig. 8, wobei nun deutlich erkennbar ist, wie am weiteren Montagebügel 45 eine oder zwei Lampen 43 angeordnet werden können. Ebenfalls erkennbar ist einer der beiden Displays bzw. Posters 51, welcher mit dem endständigen Haltestab 53 an einem Montagebügel 21 festgehalten ist. Zur Elektrifizierung der Lampen 43 sind schlussendlich Kabel 44 erkennbar, welche entweder ausserhalb des Stabes 3 geführt werden können oder aber auch durch den Stab hindurch.

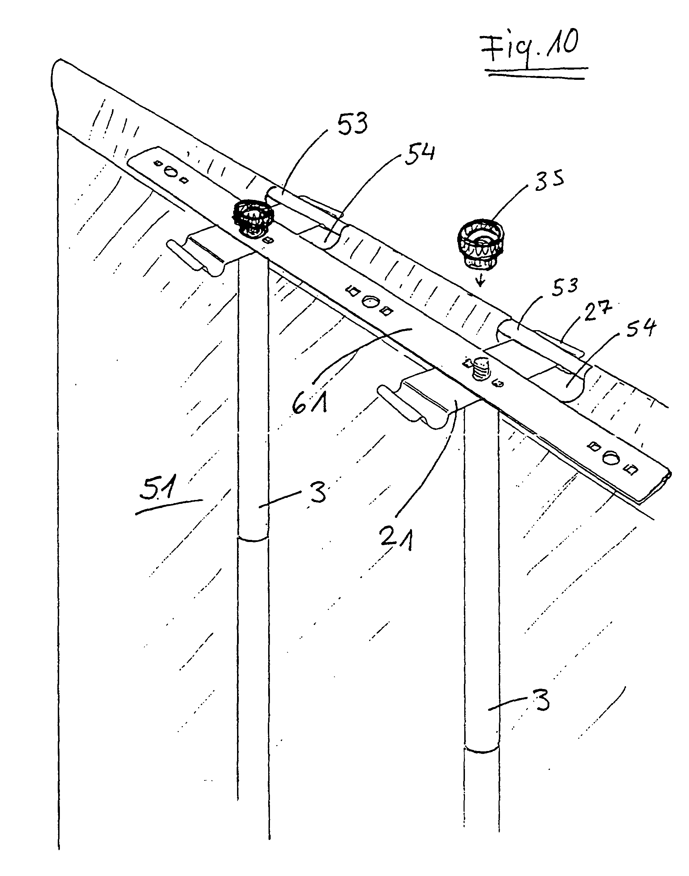

Fig. 10 zeigt einen Querstabilisator 61 eines Display-Systems, bei welchem beispielsweise sehr breite oder grossflächige Poster 51 zu präsentieren sind. Mittels diesem Querstabilisator 61 können mehrere angeordnete Stativstäbe 3 an ihrem oberen Ende gegeneinander stabilisiert werden, wobei gleichzeitig wiederum bei beiden dargestellten Steckverbindungen zwischen dem Stab und dem Querstabilisator 61 Montagebügel 21 angeordnet werden können, welche dazu dienen, Haltestäbe 53 des Posters 21 zu halten. Aufgrund der Grösse des Posters sind mehrere Durchgangsöffnungen 54 im Poster vorgesehen, damit die Halteabschnitte 27 des Montagebügels 21 am endständigen Stab 54 eingreifen können.

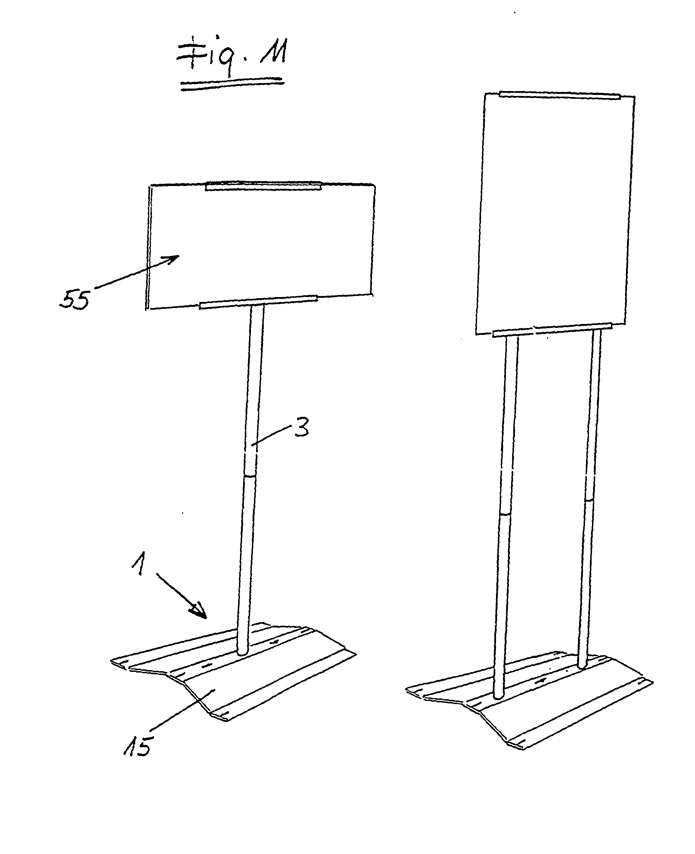

Schlussendlich ist in Fig. 11 eine weitere Verwendungsmöglichkeit einer Konstruktionsanordnung der erfinderischen Art dargestellt, indem wiederum an einer Bodenplatte über eine erfindungsgemässe Verbindungsanordnung 1 ein Stativstab 3 gehalten ist, an deren oberen Ende eine Präsentations- oder Hinweistafel 55 gehalten wird.

Bei den in den Fig. 1 - 11 dargestellten Beispielen von erfindungsgemässen Verbindungsanordnungen, Konstruktionsanordnungen sowie Display-Systemen handelt es sich selbstverständlich nur um Beispiele, welche der näheren Erläuterung der vorliegenden Erfindung dienen. Zudem soll anhand der verschiedenen Ausführungsvarianten dargelegt werden, wie vielseitig das erfindungsgemäss vorgeschlagene System bzw. die diversen Anordnungen sind. Primär bezieht sich die vorliegende Erfindung auf die Verbindungsanordnung und im weiteren auf Konstruktionsanordnungen bzw. Display-Systeme, welche nur dank dieser Verbindung derart einfach montierbar und wieder demontierbar, mit geringem Gewicht und trotzdem hoher Stabilität konstruierbar sind.

## Patentansprüche

1. Anordnung zum Verbinden eines im wesentlichen stabförmigen bzw. längsausgedehnten Elementes (3) mit einem plattenartigen bzw. flächigen Element (15), **gekennzeichnet durch**
- einen Verbindungsstift (7), aufweisend am einen Ende ein Gewinde (9) oder eine einsteckbare Befestigungskontur sowie am anderen Ende eine Abschlussfläche (13), welche einen weitgehendst dem Querschnitt des Stiftes entsprechenden vollflächigen Querschnitt aufweist, und von dieser Abschlussfläche in Stiftmitte-Richtung zurückversetzt seitliche Einkerbungen oder Ausnehmungen zur Bildung einer quer zur Stiftlängsachse verlaufenden Führungslasche (11),
- eine Aufnahme (5) in der Endabschlussfläche des stabförmigen Elementes (3) für das Gewinde oder die Befestigungskontur derart, dass der Verbindungsstift (7) **durch** eine Drehbewegung in die Aufnahme bewegbar ist, und
- eine schlitzartige Nut (17) im plattenartigen Element (15), in welcher die Führungslasche (11) längsbeweglich aufnehmbar ist, sowie eine Durchgangsöffnung (19) im Bereich der schlitzartigen Nut (17), um das andere Ende des Stiftes und die Abschlussfläche (13) **durch** die Platte hindurch aufzunehmen und um die Führungslasche (11) in die schlitzartige Oeffnung bzw. Nut (17) einführen zu können.

2. Anordnung nach Anspruch 1, **dadurch gekennzeichnet, dass** der Verbindungsstift (7) einen weitgehendst kreisrunden Querschnitt aufweist und die Führungslasche (11) mittig durch die Längsachse hindurch ausgebildet ist und die Höhe der Lasche in Stiftlängsrichtung mindestens gleich oder grösser ist als die Dicke des plattenartigen Elementes (15).

3. Anordnung nach einem der Ansprüche 1 oder 2, **dadurch gekennzeichnet, dass** die Tiefe der Aufnahme (5) im stabförmigen Element (3) mindestens gleich oder grösser ist als die Distanz vom einen Ende des Stiftes bis zum Laschenende, welches in Längsrichtung gegen die Stiftmitte hin angeordnet ist.

4. Konstruktionsanordnung, aufweisend eine oder mehrere Verbindungsanordnungen nach einem der Ansprüche 1 - 3, **dadurch gekennzeichnet, dass** ein oder mehrere der stabförmigen Elemente (3) ein- oder mehrteilig ausgebildet sind und gegebenenfalls, je an den beiden Enden eine Aufnahme (5) aufweist bzw. aufweisen für die Aufnahme je eines Verbindungsstiftes (3) und dass das plattenartige Element (15) mehrere schlitzartige Oeffnungen (17) aufweist.

5. Konstruktionsanordnunge nach Anspruch 4, **dadurch gekennzeichnet, dass** mindestens an einer Verbindungsanordnung nach einem der Ansprüche 1 - 3 ein flächiges Montageblech (21) angeordnet ist, aufweisend eine mittige Durchgangsöffnung (23), mit einem Durchmesser in etwa entsprechend dem oder grösser als der Durchmesser des Stiftes (7), sowie mindestens einen, vorzugsweise zwei, seitlich vorstehende Montageoder Halteabschnitte (27).

6. Konstruktionsanordnung nach Anspruch 5, **dadurch gekennzeichnet, dass** das Blech (21) zwei zueinander, gegenüberliegende Halteabschnitte (27) aufweist, welche durch weitgehendst halbkreisförmige Ausbuchtungen gebildet sind, welche in Richtung vom stabförmigen Element weg hin, offen ausgebildet sind.

7. Konstruktionsanordnung nach einem der Ansprüche 5 oder 6, **dadurch gekennzeichnet, dass** das oder die Bleche (21) federnd flexibel ausgebildet sind.

8. Konstruktionsanordnung nach einem der Ansprüche 5 - 7, **dadurch gekennzeichnet, dass** eines oder mehrere der stabförmigen Elemente ein- oder mehrteilig ausgebildet sind, und an einem Ende eine Aufnahme (5) für den Verbindungsstift (7) aufweisen, und am anderen Ende ein Montageabschnitt (35), wie ein Gewinde oder eine Steckkontur, um ein weiteres Montageblech (21', 45) aufzunehmen bzw. zu halten bzw. dass das weitere Montageblech mittels eines Gegenstücks oder eines weiteren Befestigungselementes (35) am anderen Ende des Stabes gehalten wird.

9. Konstruktionsanordnung nach einem der Ansprüche 5- 8, **dadurch gekennzeichnet, dass** das Montageblech in Richtung plattenartiges Element (15) vorstehende Nocken oder Laschen (31) aufweist, vorgesehen, um in der schlitzartigen Oeffnung (17) einrastend das Montageblech (21) auf dem plattenartigen Element (15) zu positionieren.

10. Konstruktionsanordnung nach einem der Ansprüche 5-7, **dadurch gekennzeichnet, dass** ein weiteres Montageblech (45) vorgesehen ist, welches U-förmig ausgebildet ist, mit je endständig einer aufgebogenen Schenkelfläche, aufweisend einen oder mehrere Montageabschnitte, welches weiteres Montageblech (45) für das Anordnen am anderen Ende des stabförmigen Elementes (3) vorgesehen ist, für das Anordnen bzw. Halten von beispielsweise Beleuchtungskörpern (43) oder weiteren Utensilien.

11. Display-Anordnung mit mindestens einer Verbindungsanordnung nach einem der Ansprüche 1 - 3 oder aufweisend eine Konstruktionsanordnung nach einem der Ansprüche 4 - 10, aufweisend eine Bodenplatte (15), mindestens ein stabförmiges Element (3), gehalten in der Bodenplatte mittels einer Verbindungsanordnung nach einem der Ansprüche 1 - 3, in welcher Verbindungsanordnung ein Montageblech (21) vorgesehen ist, sowie ein weiteres Montageblech (21', 45) am oberen Ende des stabförmigen Elementes (3) sowie mindestens zwei Displays bzw. Posters (51), welche durch je endständig angeordnete Haltestäbe (53) je in den halbkreisförmigen Ausbuchtungen (27) der beiden Montagebleche gehalten sind.

12. Display-Anordnung nach Anspruch 11, **gekennzeichnet durch** einen Präsentationstisch, welcher wiederum **durch** stabförmige Elemente (3) gehalten ist, welche stabförmigen Elemente mittels Verbindungsanordnungen nach einem der Ansprüche 1 - 3 in der Bodenplatte (15) gehalten sind, und welche an ihrem anderen bzw. oberen Ende Montage- bzw. Halteabschnitte aufweisen, für das Halten bzw. steck- oder schraubbare Aufnehmen einer Tischplatte.

13. Display-Anordnung nach Anspruch 11 oder 12, **dadurch gekennzeichnet, dass** die Bodenplatte (15) einen mittigen, vom Boden abgehobenen, längsausgedehnten, stegartigen Bereich (15') aufweist, in welchem eine oder mehrere schlitzartige Öffnungen (17) sowie Durchgänge (19) angeordnet sind, sowie seitlich, parallel zur stegartigen Fläche ausgebildet, Randabschnitte (16), welche vorzugsweise jeweils in den Ecken mit Sockel bzw. Gummisockel (20) versehen sind, damit die Bodenplatte standfest vom Boden beabstandet angeordnet werden kann.

## Claims

1. Arrangement for connecting an essentially rod-like or longitudinally extended element (3) with a plate-like or flat element (15), **characterised by**
- a connecting pin (7) having at one end a thread (9) or a plug-in fixing contour and at the other end a terminating face (13) which has a full face cross-section largely corresponding to the cross section of the pin, and set back from this terminating face in the direction of the pin centre lateral notches or recesses to form a guide tab (11) running transverse to the pin longitudinal axis,
- a holder (5) in the end terminal face of the rod-like element (3) for the thread or the fixing contour such that the connecting pin (7) can be moved in the holder by a rotational movement, and
- a slot-like groove (17) in the plate-like element (15) in which the guide tab (11) can be held longitudinally mobile and a through opening (19) in the area of the slot-like groove (17) in order to hold the other end of the pin and the terminating face (13) through the plate and be able to introduce the guide tab (11) in the slot-like opening or groove (17).

2. Arrangement according to claim 1, **characterised in that** the connecting pin (7) has a largely circular cross-section and the guide tab (11) is formed centrally through the longitudinal axis and the height of the tab in the pin longitudinal direction is at least equal to or greater than the thickness of the plate-like element (15).

3. Arrangement according to claim 1 or claim 2, **characterised in that** the depth of the holder (5) in the rod-like element (3) is at least equal to or greater than the distance from one end of the pin to the tab end arranged towards the pin centre in the longitudinal direction.

4. Construction arrangement having one or more connecting arrangements according to any one of claims 1 to 3, **characterised in that** one or more of the rod-like elements (3) are formed as one-piece or multi-piece and where applicable at both ends has or have a holder (5) for holding a connecting pin (3) and that the plate-like element (15) has several slot-like openings (17).

5. Construction arrangement according to claim 4, **characterised in that** at least on one connecting arrangement according to any of claims 1 to 3 is arranged a flat mounting plate (21) having a centre passage opening (23) with a diameter corresponding approximately to or greater than the diameter of the pin (7) and at least one, preferably two, laterally projecting mounting or retaining sections (27).

6. Construction arrangement according to claim 5, **characterised in that** the plate (21) has two opposing retaining sections (27) which are formed by largely semi-circular recesses formed open in the direction away from the rod-like element.

7. Construction arrangement according to any one of claims 5 or 6, **characterised in that** the plate or plates (2 1 ) are formed resiliently flexible.

8. Construction arrangement according to any one of claims 5 to 7, **characterised in that** one or more of the rod-like elements are formed as one-piece or multi-piece, and at one end have a holder (5) for the connecting pin (7) and at the other end a mounting section (35) such as a thread or a plug contour to hold or retain a further mounting plate (21', 45), or the further mounting plate is held by means of a counter piece or a further fixing element (35) on the other end of the rod.

9. Construction arrangement according to any one of claims 5 to 8, **characterised in that** the mounting plate has knobs or tabs (31) projecting in the direction of the plate-like element (15) in order to position the mounting plate (21) locking in the slot-like opening (17) on the plate-like element (15).

10. Construction arrangement according to any one of claims 5 to 7, **characterised in that** a further mounting plate (45) is provided which is formed U-shaped, having at the end of each curved leg surface one or more mounting sections, which further mounting plate (45) is provided for arrangement at the other end of the rod-like element (3), for arrangement or holding of for example a lighting body (43) or further utensils.

11. Display arrangement with at least one further connecting arrangement according to any of claims 1 to 3 or having a construction arrangement according to any of claims 4 to 10, with a base plate (15), at least one rod-like element (3) held in the base plate by means of a connecting arrangement according to any of claims 1 to 3, in which connecting arrangement is provided a mounting plate (21) and a further mounting plate (21', 45) on the upper end of the rod-like element (3) and at least two displays or posters (51) which are each held by retaining rods arranged at the end (53) in the semi-circular recesses (27) of the two mounting plates.

12. Display arrangement according to claim 11, **characterised by** a presentation table which in turn is held by rod-like elements (3), which rod-like elements (3) are held in the base plate (15) by means of connecting arrangements according to any of claims 1 to 3 and which at their other or upper end have mounting or retaining sections for the holding or plug-fit or screw-fit holding of a table plate.

13. Display arrangement according to claims 11 or 12, **characterised in that** the base plate (15) has a central, longitudinally extended web-like area (15') protruding from the base plate, in which area are arranged one or more slot-like openings (17) and passages (19), and at the side, formed parallel to the web-like surface, edge sections (16) which are preferably each fitted in the comers with pedestals or rubber pedestals (20) so that the base plate can be arranged stable spaced from the floor.

## Revendications

1. Dispositif pour relier un élément sensiblement en forme de tige ou de forme allongée (3) à un élément en forme de plaque ou plat (15), **caractérisé par**
- une cheville de liaison (7) qui comporte à une extrémité un filetage (9) ou un contour de fixation apte à être emboîté, et à l'autre extrémité une surface d'extrémité (13) qui présente une section transversale pleine correspondant quasiment à la section transversale de la cheville, et des encoches ou des creux latéraux qui sont en retrait par rapport à cette surface d'extrémité, vers le centre de la cheville, et qui sont destinés à former une patte de guidage (11) transversale par rapport à l'axe longitudinal de la cheville,
- un logement (5) prévu dans la surface d'extrémité de l'élément en forme de tige (3), pour le filetage ou le contour de fixation de celui-ci, de telle sorte que la cheville de liaison (7) est mobile dans ce logement grâce à un mouvement rotatif, et
- une rainure en forme de fente (17) dans l'élément en forme de plaque (15), dans laquelle la patte de guidage (11) est apte à être logée mobile longitudinalement, ainsi qu'une ouverture de passage (19) dans la zone de la rainure en forme de fente (17), pour permettre de faire passer l'autre extrémité de la cheville et la surface d'extrémité (13) à travers la plaque et d'introduire la patte de guidage (11) dans l'ouverture ou la rainure en forme de fente (17).

2. Dispositif selon la revendication 1, **caractérisé en ce que** la cheville de liaison (7) présente une section transversale quasiment ronde, la patte de guidage (11) est formée au centre, dans l'axe longitudinal, et sa hauteur dans le sens longitudinal de la cheville est supérieure ou égale à l'épaisseur de l'élément en forme de plaque (15).

3. Dispositif selon la revendication 1 ou 2, **caractérisé en ce que** la profondeur du logement (5) dans l'élément en forme de tige (3) est supérieure ou égale à la distance entre une extrémité de la cheville et l'extrémité de la patte qui est disposée dans le sens longitudinal vers le centre de la cheville.

4. Dispositif de construction comportant un ou plusieurs dispositifs de liaison selon l'une des revendications 1 à 3, **caractérisé en ce que** le ou les éléments en forme de tiges (3) sont en une ou plusieurs parties et présentent éventuellement à chaque extrémité un logement (5) destiné à recevoir une cheville de liaison (7), et **en ce que** l'élément en forme de plaque (15) présente plusieurs ouvertures en forme de fentes (17).

5. Dispositif de construction selon la revendication 4, **caractérisé en ce qu'**il est prévu sur au moins un dispositif de liaison selon l'une des revendications 1 à 3 une tôle de montage plate (21) qui présente une ouverture de passage centrale (23) avec un diamètre correspondant à peu près ou supérieur au diamètre de la cheville (7), et au moins une, de préférence deux sections de montage ou de fixation (27) saillant latéralement.

6. Dispositif de construction selon la revendication 5, **caractérisé en ce que** la tôle (21) comporte deux sections de fixation opposées (27) qui sont définies par des parties bombées quasiment semi-circulaires et qui sont ouvertes à l'opposé de l'élément en forme de tige.

7. Dispositif de construction selon la revendication 5 ou 6, **caractérisé en ce que** la ou les tôles (21) sont élastiques.

8. Dispositif de construction selon l'une des revendications 5 à 7, **caractérisé en ce que** l'un au moins des éléments en forme de tiges est en une ou plusieurs parties et présente à une extrémité un logement (5) pour la cheville de liaison (7) et à l'autre extrémité une section de montage (35) telle qu'un filetage ou un contour d'emboîtement, pour recevoir et fixer une autre tôle de montage (21', 45), et **en ce que** l'autre tôle de montage est fixée à l'autre extrémité de la tige à l'aide d'une pièce opposée ou d'un autre élément de fixation (35).

9. Dispositif de construction selon l'une des revendications 5 à 8, **caractérisé en ce que** la tôle de montage présente des saillies ou des pattes (31) saillant vers l'élément en forme de plaque (15), qui sont destinées à positionner ladite tôle de montage (21) sur l'élément en forme de plaque (15) en s'enclenchant dans l'ouverture en forme de fente (17).

10. Dispositif de construction selon l'une des revendications 5 à 7, **caractérisé en ce qu'**il est prévu une autre tôle de montage (45) qui a la forme d'un U, avec à chaque extrémité une branche repliée, qui comporte une ou plusieurs sections de montage et qui est destinée à être disposée à l'autre extrémité de l'élément en forme de tige (3), en vue de l'installation ou de la fixation d'appareils d'éclairage (43), par exemple, ou d'autres accessoires.

11. Dispositif de présentation avec au moins un dispositif de liaison selon l'une des revendications 1 à 3 ou comportant un dispositif de construction selon l'une des revendications 4 à 10, comprenant une plaque de base (15) et au moins un élément en forme de tige (3) qui est maintenu dans celle-ci à l'aide d'un dispositif de liaison selon l'une des revendications 1 à 3, lequel dispositif de liaison comporte une tôle de montage (21) et une autre tôle de montage (21', 45) à l'extrémité supérieure de l'élément en forme de tige (3), ainsi que deux panneaux ou affiches (51) qui sont fixés grâce à des barres de fixation (53) disposées à chaque extrémité, dans les creux semi-circulaires (27) des deux tôles de montage.

12. Dispositif de présentation selon la revendication 11, **caractérisé par** un présentoir qui est retenu là encore par des éléments en forme de tiges (3) qui sont fixés dans la plaque de base (15) à l'aide de dispositifs de liaison selon l'une des revendications 1 à 3 et qui présentent à leur autre extrémité, l'extrémité supérieure, des sections de montage ou de fixation pour la fixation ou l'emboîtement ou le vissage d'une tablette.

13. Dispositif de présentation selon la revendication 11 ou 12, **caractérisé en ce que** la plaque de base (15) présente une zone centrale (15') surélevée par rapport au sol, de forme allongée et en forme d'aile, dans laquelle sont disposés une ou plusieurs ouvertures en forme de fentes (17) et des passages (19), ainsi que des bords (16), sur les côtés, qui sont parallèles à la surface en forme d'aile et qui sont pourvus de préférence, dans les angles, de socles ou de socles en caoutchouc (20) pour que la plaque de base puisse être disposée de manière stable à une certaine distance du sol.
